# EUROPÄISCHE PATENTSCHRIFT

(11) **EP 1 799 600 B1**
(45) Veröffentlichungstag und Bekanntmachung des Hinweises auf die Patenterteilung: **01.10.2008**
(21) Anmeldenummer: 06764074.8
(22) Anmeldetag: 05.07.2006
(51) Int. Cl.: B65H 75/36, H02G 11/02

(54) **ELEKTRISCHES GERÄT MIT EINER KABELAUFNAHMEEINRICHTUNG**
ELECTRICAL APPLIANCE WITH A CABLE HOLDING DEVICE
APPAREIL ELECTRIQUE DOTE D'UN LOGEMENT POUR CABLE

(30) Priorität: 08.08.2005 DE 102005037363
(43) Veröffentlichungstag der Anmeldung: 27.06.2007
(73) Patentinhaber: BSH Bosch und Siemens Hausgeräte GmbH, 81739 München (DE)
(72) Erfinder: JÄGER, Harald, 83349 Palling (DE); KIPPER, Stephan, 33607 Bielefeld (DE); STIEF, Peter, 83329 Waging am See (DE)
(86) Internationale Anmeldenummer: PCT/EP2006/063917
(87) Internationale Veröffentlichungsnummer: WO 2007/017321

(56) Entgegenhaltungen:
- EP-A1- 0 063 217
- DE-A- 2 540 211
- DE-C1- 4 400 671
- FR-A- 789 378
- FR-A1- 2 530 935
- US-A- 5 533 797

## Beschreibung

Die Erfindung betrifft ein elektrisches Gerät, insbesondere ein Haushaltsgerät, wie eine Kaffee- und/oder Teemaschine, einen Wasserkocher, einen Eierkocher, einen Toaster, eine Rührmaschine oder dgl. mit einer Kabelaufnahmeeinrichtung für ein Energieversorgungskabel des elektrischen Geräts.

Elektrische Geräte, insbesondere Haushaltsgeräte, müssen in der Regel zum Betrieb mittels eines Energieversorgungskabels an eine Steckdose angeschlossen werden. Dabei soll möglichst eine an den Einsatzort angepasste Kabellänge zur Verfügung gestellt werden können. Zur Unterbringung des überschüssigen Kabels gibt es bei den bisher auf dem Markt existierenden Geräten verschiedene Möglichkeiten. Die sicherlich teuerste und aufwendigste Lösung, die jedoch mit hohem Bedienkomfort verbunden ist, ist die Verwendung eines selbstaufwickelnden Kabelaufrollers. Derartige Konstruktionen sind aber nur in teureren Geräten mit ausreichendem Platz für die Konstruktion eines solchen Kabelaufrollers realisierbar. Bei einfacheren Haushaltsgeräten wie z.B. Wasserkochem oder Kaffeemaschinen ist es bekannt, in einem Sockel des Geräts ein einfaches Kabelstaufach anzuordnen, in welches das überschüssige Kabel einfach hineingeschoben wird. Verschiedene Beispiele hierzu werden unter anderem in der DE 100 16 289 A1 und der DE 201 16 107 U1 beschrieben. Diese Lösung erfordert relativ viel Platz für das Kabelstaufach, da die Zuleitung in diesem Fall nur sehr undefiniert eingeschoben werden kann und daher einen großen Stauraum benötigt. Eine Unterbringung in einem sehr flachen Sockel ist daher nicht möglich. Darüber hinaus gibt es Geräte, welche im Sockel eine Kabelaufwicklung aufweisen, in der das Kabel in einer Führung umlaufend spiralförmig aufgewickelt wird siehe z.B. die DE-A-25 40 211. Eine solche umlaufende Kabelaufwicklung hat den Nachteil, dass hierzu der gesamte Sockelbereich zur Verfügung stehen muss. Anderenfalls würde eine solche Wicklung dazu führen, dass sich das Energieversorgungskabel mindestens an einer Stelle selbst kreuzen muss. Dies würde eine dementsprechend vergrößerte Bauhöhe der Kabelaufnahme-Einrichtung und somit einen erhöhten Sockel erfordern.

Ein weiteres elektrisches Gerät mit einer Kabelaufnahmeeinrichtung ist aus der EP-A-0 063 217 bekannt.

Es ist eine Aufgabe der vorliegenden Erfindung, ein elektrisches Gerät der eingangs genannten Art dahingehend weiterzuentwickeln, dass es eine kostengünstige und einfache Kabelaufnahme-Einrichtung bietet, welche nur einen sehr kleinen Bauraum erfordert und daher auch in einem flachen Sockel unterbringbar ist.

Diese Aufgabe wird durch ein elektrisches Gerät gemäß Patenanspruch 1 gelöst.

Erfindungsgemäß ist die Kabelaufnahme-Einrichtung in einem Sektor an einer Unterseite eines Sockels des Geräts angeordnet. Die erfindungsgemäße Kabelaufnahme-Einrichtung weist dabei einen Durchgangs-Kabelkanal auf, welcher sich von einer von einem Rand des Sockels beabstandeten Kabeldurchführöffnung, durch welche das Energieversorgungskabel vom Sockel zu einer elektrischen Komponente im Inneren des Geräts geführt wird, zu einer am Rand des Sockels angeordneten Kabelauslassöffnung er streckt, durch die das Energieversorgungskabel vom Sockel aus nach außen geführt wird. Außerdem weist die Kabelaufnahme-Einrichtung sich seitlich vom Durchgangs-Kabelkanal weg erstreckende Kabelkanal-Schleifen auf, welche so zueinander angeordnet und ausgebildet sind, dass durch eine Verlegung des Energieversorgungskabels entlang unterschiedlicher Kombinationen und/oder Anzahlen von aufeinander folgenden Kabelkanal-Schleifen auf dem Weg von der Kabeldurchführöffnung zur Kabelauslassöffnung das Energieversorgungskabel auf einer unterschiedlichen Länge in der Kabelaufnahme-Einrichtung unterbringbar ist.

Der Verbraucher kann somit auf einfache Weise dadurch, auf welche Weise - insbesondere durch wie viele und gegebenenfalls durch welche der Kabelkanal-Schteifen - er das Kabel verlegt, zumindest in bestimmten Abstufungen festlegen, auf welcher Länge das Energieversorgungskabel sicher in der Kabelaufnahme-Einrichtung untergebracht sein soll und welche Kabel-Restlänge er vom Standort des Gerätes bis zur Steckdose zur Verfügung hat. Um die maximale Länge des Kabels zu nutzen, kann er das Kabel dabei auch auf direktem Wege von der Kabeldurchführöffnung durch den Durchgangs-Kabelkanal zur Kabelauslassöffnung verlegen.

Die abhängigen Ansprüche enthalten besonders vorteilhafte Weiterbildungen und Ausgestaltungen des erfindungsgemäßen elektrischen Geräts.

Um auch mit einer geringen Anzahl von Kabelkanal-Schleifen möglichst viele Kombinationsmöglichkeiten bilden zu können und somit möglichst viele unterschiedliche Kabellängen zu erreichen, weist besonders bevorzugt zumindest ein Teil der Kabelkanal-Schleifen unterschiedliche Längen auf.

Bei einer besonders bevorzugten Ausführungsform erstrecken sich die Kabelkanal-Schleifen von gegenüberliegenden Seiten des Durchgangs-Kabelkanals aus vom Durchgangs-Kabelkanal weg. Dies hat den Vorteil, dass der Benutzer das Energieversorgungskabel beispielsweise mäanderförmig mal nach rechts und mal nach links vom Durchgangs-Kabelkanal durch die Kabelkanal-Schleifen verlegen kann.

Bei einer besonders bevorzugten Variante dieses Ausführungsbeispiels sind die sich von gegenüberliegenden Seiten des Durchgangs-Kabelkanals vom Durchgangs-Kabelkanal weg erstreckenden Kabelkanal-Schleifen entlang des Durchgangs-Kabelkanals gegeneinander so versetzt, dass der Eingang einer nachfolgenden Kabelkanal-Schleife im Wesentlichen einem Ausgang der vorhergehenden Kabelkanal-Schleife gegenüberliegt. Auf diese Weise kann das Kabel ohne scharfe Abknickungen von einem Durchgangs-Kabelkanal in einen nachfolgenden gegenüberliegenden Durchgangs-Kabelkanal weitergeführt werden.

Bei einer besonders vorteilhaften Ausgestaltung verläuft zumindest ein Teil der Kabelkanal-Schleifen um Kabelführungs-Elemente mit der Kontur eines Tropfens, wobei die Spitze der Tropfen-Kontur in Richtung des Durchgangs-Kabelkanals weist. Bei dieser Ausgestaltung ist einerseits dafür gesorgt, dass die Kabel an dem vom Durchgangs-Kabelkanal wegweisenden Ende der Kabelkanal-Schleifen mit relativ großem Radius umgelenkt wer den, um eine Beschädigung des Energieversorgungskabels zu vermeiden, und anderer seits die Ein- bzw. Ausgänge der Kabelkanal-Schleifen am Durchgangs-Kabelkanal relativ nah aneinander liegen.

Der Sektor des Sockels kann vorzugsweise im Wesentlichen einem Kreissektor, einem Kreissegment oder einem Ringsektor entsprechen. In diesem Fall erstrecken sich die Kabelkanal-Schleifen im Wesentlichen in zirkularer Richtung. Eine solche Ausgestaltung bietet sich insbesondere bei Sockeln mit einer zumindest teilweise kreisförmigen oder ringförmigen-Grundfläche an.

Die Kabeldurchführöffnung ist dabei vorzugsweise in einem mittleren Bereich des Sockels angeordnet und der Durchgangs-Kabelkanal erstreckt sich im Wesentlichen radial nach außen zum Sockelrand. Grundsätzlich ist es aber auch möglich, dass sich der Durchgangs-Kabelkanal in einer beliebigen anderen Form, beispielsweise S-förmig geschlungen, von der Kabeldurchführöffnung zur Kabelauslassöffnung erstreckt.

Um das innerhalb der Kabelaufnahme-Einrichtung verlegte Energieversorgungskabel sicher zu halten, sind vorzugsweise an den Kabelkanal-Schleifen Klemmmittel angeordnet.

Die Erfindung wird im Folgenden unter Hinweis auf die beigefügte Figur anhand eines Ausführungsbeispiels noch einmal näher erläutert.

Dabei zeigt die einzige Figur eine Unteransicht eines elektrischen Haushaltsgerätes 1 mit einem kreisförmigen Sockel 4 und einer in einem Sektor des Sockels 4 angeordneten Kabelaufnahme-Einrichtung 5.

Bei dem in der Figur dargestellten Haushaltsgerät 1 handelt es sich um eine Kaffeemaschine. Grundsätzlich könnte es sich aber auch um einen Wasserkocher oder ein sonstiges Haushaltsgerät handeln, welches einen kreisförmigen Sockel 4 aufweist.

In der Mitte des Sockels 4 befindet sich eine Kabeldurchführöffnung 6. Durch die Kabeldurchführöffnung 6 wird das Energieversorgungskabel 2, welches endseitig mit einem üblichen Stecker 3 bestückt ist, zu den elektrischen Komponenten im Inneren des Gehäuses des Haushaltsgeräts 1 geführt. Von dieser Kabeldurchführöffnung 6 aus wird das Kabel 2 innerhalb einer in einem Sektor des Sockels 4 angeordneten Kabelaufnahme-Einrichtung 5 zu einer am Rand 8 des Sockels 4 angeordneten Kabelauslassöffnung 7 geführt. Bei der Kabelauslassöffnung 7 handelt es sich hier um eine Nut innerhalb des Randes 8 des Sockels 4, durch die das Energieversorgungskabel 2 nach außen geführt wird. Innerhalb der Kabelauslassöffnung 7 befinden sich Klemmmittel für das Energieversorgungskabel 2.

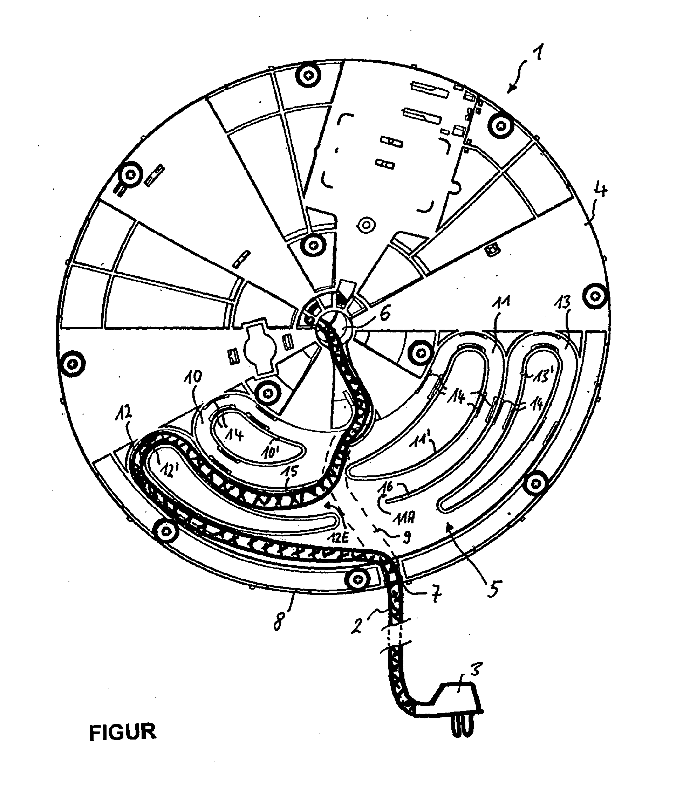

Wie die Figur deutlich zeigt, besteht die Kabelaufnahme-Einrichtung 5 aus einer Anzahl von zur Sockel-Unterseite hin offenen Kabelkanälen 9, 10, 11, 12, 13, welches durch eine bestimmte Anordnung von Kabelführungs-Elementen 10', 11', 12', 13' und entsprechenden zu dem Kabelführungselementen 10', 11', 12', 13' zumindest abschnittsweise im Wesentlichen parallel verlaufenden laufenden Stegen 15, 16 gebildet werden. Die Anordnung dieser Stege 15, 16 und der Kabelführungselemente 10', 11', 12', 13', welche beispielsweise ebenfalls aus umlaufenden Stegen gebildet sein können, ist derart, dass ein auf relativ direktem Weg von der Kabeldurchführöffnung 6 zur Kabelauslassöffnung 7 verlaufender Durchgangs-Kabelkanal 9 gebildet wird, der im Wesentlichen radial - hier mit einer leichten S-Wölbung, wie dies in Figur 1 gestrichelt dargestellt ist - nach außen verläuft Von diesem Durchgangs-Kabelkanal 9 erstrecken sich jeweils seitlich in zirkularer Richtung vom Durchgangs-Kabelkanal 9 weg Kabelkanal-Schleifen 10, 11, 12, 13 unterschiedlicher Form und Länge. Diese Kabelkanal-Schleifen 10, 11, 12, 13 werden dabei im Wesentlichen durch die Kabelführungselemente 10', 11', 12', 13' gebildet, welche jeweils eine tropfenähnliche Kontur aufweisen, wobei die spitze Seite der Tropfenkontur in Richtung des Durchgangs-Kabelkanals 9 weist. Zwei sich zur gleichen Seite hin vom Durchgangs-Kabelkanal 9 nebeneinander erstreckende Kabelkanal-Schleifen 10, 12, 11, 13 sind jeweils durch einen Steg 15, 16 getrennt.

Wie die Figur weiter zeigt, kann der Benutzer in einer derartigen erfindungsgemäßen Kabelaufnahme-Einrichtung 5 beliebige Längen des Energieversorgungskabels 2 verlegen, indem er das Kabel wahlweise auf verschiedenen Wegen durch die unterschiedlichen Kabelkanal-Schleifen 10, 11, 12, 13 führt. Möchte er die maximale Länge des Kabels 2 nutzen, so kann er das Kabel 2 auf direktem Wege entlang des Durchgangs-Kabelkanals 9 verlegen. Möchte der Benutzer hingegen das Restkabel, welches sich außerhalb des Sockels 4 befindet, möglichst kurz halten, so kann er das Kabel 2 innerhalb der Kabelaufnahme-Einrichtung 5 zunächst entlang der ersten Kabelkanal-Schleife 10, dann weiter entlang der zweiten Kabelkanal-Schleife 11, danach entlang der dritten Kabelkanal-Schleife 12 und letztlich entlang der vierten Kabelkanal-Schleife 13 nach außen verlegen. Um ein möglichst knickfreies Verlegen des Kabels entlang sämtlicher Kabelkanal-Schleifen 10, 11, 12, 13 zu ermöglichen, sind jeweils die Kabelkanal-Schleifen 10, 11, 12, 13 innerhalb der Kabelaufnahme-Einrichtung 5 so versetzt zueinander angeordnet, dass der Eingang einer auf der gegenüberliegenden Seite des Durchgangs-Kabelkanals 9 nachfolgenden Kabelkanal-Schleife möglichst genau dem Ausgang einer vorhergehenden Kabelkanal-Schleife gegenüberliegt. Dies ist besonders gut in der Figur am Ausgang 11A der zweiten Kabelkanal-Schleife 11 und dem gegenüberliegenden Eingang 12E der dritten Kabelkanal-Schleife 12 zu sehen.

Dadurch, dass die einzelnen Kabelkanal-Schleifen 10, 11, 12, 13 unterschiedliche Längen aufweisen, kann der Benutzer die außerhalb des elektrischen Geräts 1 befindliche Restlänge des Kabels 2 nicht nur durch die Wahl der Anzahl der Kabelkanal-Schleifen 10, 11, 12, 13, durch die er das Kabel 2 verlegt, sondern auch durch die Auswahl, welche bzw. welche Kombination der Kabelkanal-Schleifen 10, 11, 12, 13 er nutzt, bestimmen.

Unter einer Kombination von Kabelkanal-Schleifen 10, 11, 12, 13 ist dabei auch zu verstehen, dass der Benutzer gegebenenfalls das Kabel 2 nur entlang einer bestimmten Kabelkanal-Schleife 10, 11, 12, 13 mit einer bestimmten Länge verlegt. So erhält er beispielsweise, wenn er das Kabel 2 nur entlang der ersten Kabelkanal-Schleifen 10 verlegt, eine andere Restkabel-Länge außerhalb des Gerätes 1 als wenn er, wie dies in der Figur dargestellt ist, das Kabel 2 nur durch die dritte Kabelkanal-Schleife 12 verlegt.

Auf diese Weise ist auch bereits mit vier verschiedenen Kabelkanal-Schleifen 10, 11, 12, 13 - wie dies in der Figur dargestellt ist - eine Vielzahl unterschiedlicher Restlänge des Kabels 2 außerhalb des Geräts 1 realisierbar, das heißt, der Benutzer kann dadurch mehr als vier verschiedene Längenabstufungen erreichen.

Es wird abschließend noch einmal darauf hingewiesen, dass es sich bei dem vorhergehend beschriebenen elektrischen Gerät um ein Ausführungsbeispiel handelt, welches vom Fachmann in verschiedenster Weise modifiziert werden kann, ohne den Bereich der Erfindung zu verlassen. Insbesondere können die konkreten Ausgestaltungen der Kabelkanal-Schleifen in anderer Form als in der hier beschriebenen erfolgen. Ebenso kann beispielsweise der Sockel 4 bzw. die Kabelaufnahmeeinrichtung 5 nach unten durch einen vom Benutzer zu öffnenden Deckel abgedeckt sein.

## Patentansprüche

1. Elektrisches Gerät (1) mit einer Kabelaufnahmeeinrichtung (5) für ein Energieversorgungskabel (2) des elektrischen Geräts (1),
**dadurch gekennzeichnet,**
**dass** die Kabelaufnahmeeinrichtung (5) in einem Sektor an einer Unterseite eines Sockels (4) des Geräts (1) angeordnet ist und
einen Durchgangs-Kabelkanal (9), welcher sich von einer von einem Rand (8) des Sockels (4) beabstandeten Kabeldurchführöffnung (6), durch welche das Energieversorgungskabel (2) vom Sockel (4) aus zu einer elektrischen Komponente des Geräts (1) geführt wird, zu einer am Rand (8) des Sockels (4) angeordneten Kabelauslassöffnung (7) erstreckt,
sowie sich seitlich vom Durchgangs-Kabelkanal (9) weg erstreckende Kabelkanal-Schleifen (10, 11, 12, 13) aufweist, welche so zueinander angeordnet und ausgebildet sind, dass durch eine Verlegung des Energieversorgungskabels (2) entlang unterschiedlicher Kombinationen und/oder Anzahlen von aufeinander folgenden Kabelkanal-Schleifen (10, 11, 12, 13) auf dem Weg von der Kabeldurchführöffnung (6) zur Kabelauslassöffnung (7) das Energieversorgungskabel (2) auf einer unterschiedlichen Länge in der Kabelaufnahmeeinrichtung (5) unterbringbar ist.

2. Elektrisches Gerät (1) nach Anspruch 1, **dadurch gekennzeichnet, dass** zumindest ein Teil der Kabelkanal-Schleifen (10, 11, 12, 13) unterschiedliche Längen aufweist.

3. Elektrisches Gerät (1) nach Anspruch 1 oder 2, **dadurch gekennzeichnet, dass** sich die Kabelkanal-Schleifen (10, 11, 12, 13) von gegenüberliegenden Seiten des Durchgangs-Kabelkanals (9) aus vom Durchgangs-Kabelkanal (9) weg erstrecken.

4. Elektrisches Gerät (1) nach Anspruch 3, **dadurch gekennzeichnet, dass** die sich von gegenüberliegenden Seiten des Durchgangs-Kabelkanals (9) aus vom Durchgangs-Kabelkanal (9) weg erstreckenden Kabelkanal-Schleifen (10, 11, 12, 13) entlang des Durchgangs-Kabelkanals (9) gegeneinander so versetzt sind, dass der Eingang (12E) einer nachfolgenden Kabelkanal-Schleife (10, 11, 12, 13) im Wesentlichen einem Ausgang (11A) der vorhergehenden Kabelkanal-Schleife (10, 11, 12, 13) gegenüberliegt.

5. Elektrisches Gerät (1) nach einem der Ansprüche 1 bis 4, **dadurch gekennzeichnet, dass** zumindest ein Teil der Kabelkanal-Schleifen (10, 11, 12, 13) um Kabelführungselemente (10', 11', 12', 13') mit einer tropfenähnlichen Kontur verläuft, wobei die spitze Seite der Tropfenkontur in Richtung des Durchgangs-Kabelkanals (9) weist.

6. Elektrisches Gerät (1) nach einem der Ansprüche 1 bis 5, **dadurch gekennzeichnet, dass** der Sektor des Sockels (4) im Wesentlichen einem Kreissektor, Kreissegment oder Ringsektor entspricht und die Kabelkanal-Schleifen (10, 11, 12, 13) sich im Wesentlichen in zirkularer Richtung erstrecken.

7. Elektrisches Gerät (1) nach einem der Ansprüche 1 bis 6, **dadurch gekennzeichnet, dass** die Kabeidurchführöffnung (6) in einem mittleren Bereich des Sockels (4) angeordnet ist und der Durchgangs-Kabelkanal (9) sich im Wesentlichen radial nach außen zum Sockelrand (8) erstreckt.

8. Elektrisches Gerät (1) nach einem der Ansprüche 1 bis 5, **dadurch gekennzeichnet, dass** an den Kabelkanal-Schleifen (10, 11, 12, 13) Klemmmittel (14) zum Halten des Energieversorgungskabels angeordnet sind.

## Claims

1. Electrical apparatus (1) with a cable receiving device (5) for an energy supply cable (2) of the electrical apparatus (1), **characterised in that** the cable receiving device (5) is arranged in a sector at an underside of a base (4) of the apparatus (1) and a passage cable channel (9) which extends from a cable feedthrough opening (6), which is spaced from an edge (8) of the base (4) and through which the energy supply cable (2) is led from the base (4) out to an electrical component of the apparatus (1), to a cable outlet opening (7) arranged at an edge (8) of the base (4), as well as cable channel loops (10, 11, 12, 13), which extend laterally away from the passage cable channel (9) and which are so arranged relative to one another and constructed that through laying of the energy supply cable (2) along different combinations and/or numbers of successive cable channel loops (10, 11, 12, 13) on the way from the cable feedthrough opening (6) to the cable outlet opening (7) the energy supply cable (2) can be accommodated to a different length in the cable receiving device (5).

2. Electrical apparatus (1) according to claim 1, **characterised in that** at least a part of the cable channel loops (10, 11, 12, 13) has different lengths.

3. Electrical apparatus (1) according to claim 1 or 2, **characterised in that** the cable channel loops (10, 11, 12, 13) extend away from the passage cable channel (9) from opposite sides of the passage cable channel (9).

4. Electrical apparatus (1) according to claim 3, **characterised in that** the cable channel loops (10, 11, 12, 13) extending away from the passage cable channel (9) from opposite sides of the passage cable channel (9) are so offset relative to one another along the passage cable channel (9) that the entry (12E) of a succeeding cable channel loop (10, 11, 12, 13) is substantially opposite an exit (11A) of the preceding cable channel loop (10, 11, 12, 13).

5. Electrical apparatus (1) according to one of claims 1 to 4, **characterised in that** at least a part of the cable channel loops (10, 11, 12, 13) runs around cable guide elements (10', 11', 12', 13') with a contour similar to a drop, wherein the pointed end of the drop contour faces in the direction of the passage cable channel (9).

6. Electrical apparatus (1) according to one of claims 1 to 5, **characterised in that** the sector of the base (4) corresponds substantially with a sector of a circle, a segment of a circle or a sector of a ring and the cable channel loops (10, 11, 12, 13) extend in substantially circular direction.

7. Electrical apparatus (1) according to one of claims 1 to 6, **characterised in that** the cable passage opening (6) is arranged in a middle region of the base (4) and the passage cable channel (9) extends substantially radially outwardly to the base edge (8).

8. Electrical apparatus (1) according to one of claims 1 to 5, **characterised in that** clamping means (14) for holding the energy supply cable are arranged at the cable channel loops (10, 11, 12, 13).

## Revendications

1. Appareil électrique (1) comprenant un dispositif de logement de câble (5) pour un câble d'alimentation en énergie (2) de l'appareil électrique (1),
**caractérisé en ce que**
le dispositif de logement de câble (5) est disposé dans un secteur sur un côté inférieur d'un socle (4) de l'appareil (1) et
présente un caniveau de câble de passage (9), qui s'étend depuis une ouverture de passage de câble (6) espacé d'un bord (8) du socle (4), par laquelle le câble d'alimentation en énergie (2) est guidé à partir du socle (4) vers un composant électrique de l'appareil (1), jusqu'à une ouverture de sortie de câble (7) disposée sur le bord (8) du socle (4),
et des bandes de caniveau de câble (10, 11, 12, 13) s'étendant sur le côté à partir du caniveau de câble de passage (9), lesquelles boucles sont disposées les unes par rapport aux autres et réalisées de telle sorte que, grâce à une pose du câble d'alimentation en énergie (2) le long de différentes combinaisons et/ou différents nombres de boucles de caniveau de câble (10, 11, 12, 13) consécutives sur le trajet allant de l'ouverture de passage de câble (6) à l'ouverture de sortie de câble (7), le câble d'alimentation en énergie (2) peut être logé sur une longueur différente dans le dispositif de logement de câble (5).

2. Appareil électrique (1) selon la revendication 1, **caractérisé en ce qu'**au moins une partie des boucles de caniveau de câble (10, 11, 12, 13) présente différentes longueurs.

3. Appareil électrique (1) selon la revendication 1 ou 2, **caractérisé en ce que** les bandes de caniveau de câble (10, 11, 12, 13) s'étendent, à partir de côtés opposés du caniveau de passage (9) en partant de ce caniveau.

4. Appareil électrique (1) selon la revendication 3, **caractérisé en ce que** les bandes de caniveau de câble (10, 11, 12, 13) s'étendant à partir de côtés opposés du caniveau de câble de passage (9) en partant de ce caniveau sont décalées le long du caniveau de câble de passage (9) les unes par rapport aux autres, de telle sorte que l'entrée (12E) d'une boucle de caniveau de câble (10, 11, 12, 13) consécutive fait face sensiblement à une sortie (11A) de la boucle de caniveau de câble (10, 11, 12, 13) antérieure.

5. Appareil électrique (1) selon l'une quelconque des revendications 1 à 4, **caractérisé en ce qu'**au moins une partie des boucles du caniveau de câble (10, 11, 12, 13) est agencée autour d'éléments de guidage de câble (10', 11', 12', 13') avec un contour semblable à une goutte, le côté pointu du contour de câble étant dirigé vers le caniveau de câble de passage (9).

6. Appareil électrique (1) selon l'une quelconque des revendications 1 à 5, **caractérisé en ce que** le secteur du socle (4) correspond sensiblement à un secteur circulaire, un segment circulaire ou un secteur annulaire et les bandes de caniveau de câble (10, 11, 12, 13) s'étendent sensiblement dans la direction circulaire.

7. Appareil électrique (1) selon l'une quelconque des revendications 1 à 6, **caractérisé en ce que** l'ouverture de passage de câble (6) est disposée dans une zone centrale du socle (4) et le caniveau de câble de passage (9) s'étend sensiblement radialement vers l'extérieur en direction du bord du socle (8).

8. Appareil électrique (1) selon l'une quelconque des revendications 1 à 5, **caractérisé en ce que** des moyens de serrage (14) destinés à tenir le câble d'alimentation en énergie sont disposés sur les boucles de caniveau de câble (10, 11, 12, 13).
